# EUROPEAN PATENT SPECIFICATION

(11) **EP 3 318 354 B1**
(45) Date of publication and mention of the grant of the patent: **21.12.2022**
(21) Application number: 17199328.0
(22) Date of filing: 31.10.2017
(51) Int. Cl.: B23B 27/08, B23B 27/04

(54) **PARTING OFF BLADE AND PARTING OFF MACHINE**
ABSTECHKLINGE UND ABSTECHMASCHINE MIT EINER SOLCHEN ABSTECHKLINGE
LAME DE SÉPARATION ET MACHINE DE SÉPARATION AVEC UNE TELLE LAME

(30) Priority: 02.11.2016 IT 201600110252
(43) Date of publication of application: 09.05.2018
(73) Proprietor: Ivaldi, Dario, 17012 Albisola Marina (SV) (IT); Lemme, Rosanna, 17100 Savona (IT); Rossi, Silvio, 17100 Savona (IT)
(72) Inventor: Ivaldi, Dario, 17012 Albisola Marina (SV) (IT)
(74) Representative: Bottino, Giovanni

(56) References cited:
- EP-A1- 3 222 376
- WO-A1-2006/118506
- WO-A1-2008/140191
- DE-C- 320 274
- DE-U- 1 688 362
- DE-U1- 20 318 005
- GB-A- 810 512
- GB-A- 1 402 946
- JP-U- S 607 904
- US-A- 2 391 133
- US-A- 3 296 683
- US-A- 3 564 684
- DATABASE WPI Week 201031 Thomson Scientific, London, GB; AN 2010-E96783 XP002772312, -& CN 101 698 243 A (ZHUZHOU CEMENTED CARBIDE CUTTING TOOLS C) 28 April 2010 (2010-04-28)
- ZYKIN A S: "Parting-off titanium ingots in a lathe", RUSSIAN ENGINEERING JOURNAL,, vol. 49, no. 3, 1 January 1969 (1969-01-01), pages 75-76, XP001338991,

## Description

The present invention relates to a parting off blade according to the preamble of claim 1 for use in combination with a parting off machine, a lathe or the like, which comprises a free front end for cutting a sample.

Such a parting off blade is known from GB 810 512 A.

The above described configuration is the common configuration of a prior art parting off machine, a lathe or the like.

Thus, prior art machines have a blade that is progressively moved toward a sample, such as a metal rod, which is rotated by a rotatably mounted samplesupporting member driven by a motor unit, such as an electric motor, a pneumatic motor or the like.

The free front end of the parting off blade contacts the lateral surface of the sample and, as it moves, starts to form a cutting groove in the sample, thereby cutting the part of the sample that is "external" to the cutting groove, i.e. the part that is not secured to the support member and is beyond the cutting groove.

The free front end generally has a cutting insert which is first introduced into the sample to be cut, said cutting insert being fixed to a blade section that penetrates the sample after the cutting insert, and whose length varies according to the depth of the cut to be formed.

It shall be understood from the above that the cutting groove shall simply be as deep as the radius of the sample to be cut for the sample to be cut off.

A variety of parting off machines and blades are known in the art, having different sample cutting arrangements.

One example is disclosed in GB810512 and GB1402946.

Nevertheless, prior art machines and blades have the problem of the blade often jamming in the sample as the latter is being processed.

Blade jamming may be caused either by the large amount of chips generated during cutting or by deformation, e.g. deflection, of the sample to be cut.

Chip removal is a critical aspect for quick and successful cutting, because any chips trapped between the blade and the sample will hinder the movement of the blade, thereby slowing down the cutting operation and preventing clean cutting of the sample.

The same problems occur if the blade is stuck due to a deflection of the sample: when cuts are very deep, the parts of the sample that are divided by the cutting groove, but are not completely separated, may be deflected toward each other, thereby limiting the width of the groove and trap the blade inside the groove.

Therefore, there exists a yet unfulfilled need in the art for parting off machines and blades that can obviate the above described shortcomings and drawbacks.

The present invention fulfills the above purposes by providing a parting off blade according to claim 1, whose shape at least partially has an increased thickness in the direction opposite to the free front end.

The free front end is the end that first contacts the sample and forms the chips.

As the blade penetrates the sample, the increased thickness widens the cutting groove, thereby allowing chip removal.

Therefore, chips will not be trapped between the free end of the blade and the sample, and quick and clean cutting of the sample may be achieved.

It will be appreciated that the blade of the present invention may be formed with any size and using any part whatever, as long as it has an increased thickness, to increase the width of the cutting groove.

The present invention provides two possible specific configurations of the blade, to achieve the desired increased thickness.

A first cutting insert is mounted at the free front end of the blade and a cutting section is provided behind the first cutting insert.

As mentioned above, the cutting insert is the part of the blade that first contacts the sample and begins to cut the outer surface whereas the cutting section of the blade varies according to the cutting depth and is the part of the blade that penetrates the material and completes the cut.

The blade of the present invention has at least one second cutting insert located behind the cutting section, said second cutting insert having a greater thickness than the first cutting insert.

Thus, due to such increased thickness, as soon as the second cutting insert starts to cut the sample, it widens the cutting groove defined by the first cutting insert, thereby allowing chip removal.

Furthermore, due to the increased thickness, the above configuration imparts greater strength to the cutoff blade of the present invention as compared with prior art parting off blades.

This effect is achieved by a reduction of the blade section, which is typically the thinnest and weakest part of prior art cutoff blades.

These technical effects are further optimized by a peculiar embodiment of the blade of the present invention, which will be shown in the accompanying figures.

According to the invention, the first cutting insert and the second cutting insert are coaxially arranged along the longitudinal axis of the blade, to obtain a symmetric thickness increase.

According to an improvement of the blade of the present invention, the second cutting insert may be arranged to be movable along the blade.

Particularly, as shown in certain embodiments, the second cutting insert may be adjustably fixed, i.e. at adjustable distances, along the blade.

Due to the possibility of changing the position of the second cutting insert, the length of the cutting section may be adjusted, such that the parting off blade of the present invention may be adapted to all desired cutting depths.

As mentioned above, both the first and second cutting inserts and the cutting section may have any shape and size, but in a possible variant embodiment the cutting section has a length of 10 to 20 millimeters, preferably of 12 to 18 millimeters, particularly of 15 millimeters.

Furthermore, the thickness difference between the first and second cutting inserts advantageously ranges from 0.5 to 1.5 millimeters.

All these values may obviously vary according to the desired cutting depth.

A second possible configuration to provide an increased thickness in the parting off blade of the present invention involves a change in the shape of the cutting insert. This configuration is not according to the invention.

Here, unlike the previous configuration, a single cutting insert is mounted at the free front end of the blade and a cutting section is located behind the cutting insert.

In this embodiment, the cutting insert has a front part and a rear part, the front part having a smaller thickness than the rear part.

This arrangement will also widen the cutting groove, due to the increased thickness of the rear part of the cutting insert.

Furthermore, in this embodiment, the cutting insert is adapted to be mounted to other operating machines in addition to parting off machines, such as a circular saw machine, to obtain the same advantages as discussed above.

In an embodiment, which is not according to the invention, the cutting insert has at least two side walls, a top wall and a bottom wall.

The side walls of the front part are connected to the side walls of the rear part through a head wall.

Here, a lateral thickness increase is obtained, which optimizes the cut and the formation of the cutting groove on the sample.

In one improvement of the above discussed variant, the side walls of the front part are inclined to the head wall, to converge toward the head wall.

As more clearly explained by certain illustrated exemplary embodiments, this shape improves removal of both chips and the cutting section of the parting off blade of the present invention.

Advantageously, the head wall has a width ranging from 0.2 millimeters to 1 millimeter.

In view of the above described advantages of the parting off blade, the present invention also relates to a parting off machine, a lathe or the like, which comprises at least one parting off blade and a rotatably mounted support for a sample to be processed.

The parting off blade of the machine of the present invention has the features of the parting off blade according to claim 1.

It will be thus appreciated that the parting off machine of the present invention provides the same advantages and improvements as described above for the parting off blade.

These and other features and advantages of the present invention will appear more clearly from the following description of a few embodiments, illustrated in the annexed drawings, in which:
Fig. 1 is a view of a prior art parting off blade;
Figs. 2a and 2b show two views, i.e. a top view and a side view of the parting off blade of the present invention in a possible embodiment;
Figs. 3a and 3b show two views, i.e. a top view and a perspective view of the parting off blade of the present invention in a further embodiment;
Fig. 4 is a side view of a possible embodiment of the cutoff blade of the present invention.

It shall be noted that the figures annexed to the present application depict certain embodiments of the parting off blade of the present invention, to provide an improved understanding of the advantages and characteristics of the parting off blade.

These figures shall be intended by way of illustration and without limitation to the inventive concept of the parting off blade of the present invention, which consists in providing a blade that can make quick and clean cuts, while affording easy chip removal.

As mentioned above, the parting off blade of the present invention is generally adapted for use in combination with a parting off machine, a lathe or the like, and comprises a free front end for cutting a sample.

Furthermore, the parting off blade has a shape that at least partially includes an increased thickness in the direction opposite to the free front end.

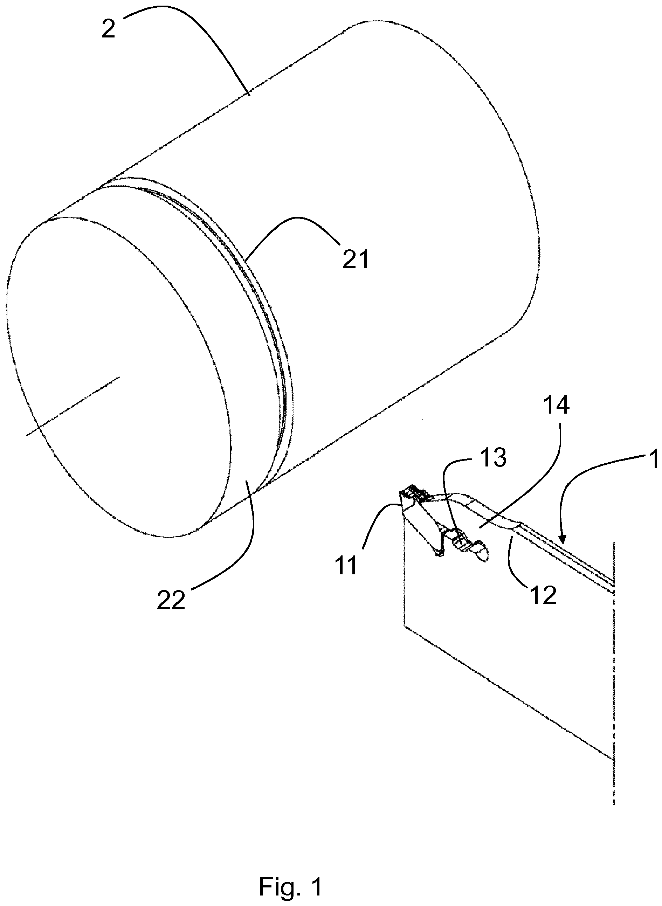

On the other hand, Figure 1 shows a prior art parting off blade.

The parting off blade 1 comprises a cutting insert 11 that is mounted at the free front end of the blade and a cutting section 12 located behind the cutting insert 11.

It shall be noted that the term "behind" is related to the actuation of the parting off blade, i.e. to the direction in which the parts of the parting off blade 1 are introduced into the sample 2.

Particularly referring to Figure 1, the sample 2 is rotated, the parting off blade 1 is translationally moved toward the sample 2 and the cutting insert 11 begins to form the cutting groove 21 on the side walls of the sample 2.

As the parting off blade 1 is pushed toward the sample 1, the cutting insert 11 will be introduced deeper into the sample 2.

After the cutting insert 11, the cutting section 12 will penetrate the cutting groove 21 formed by the cutting insert 11.

This is what is meant by the term "behind", i.e. the cutting section 12 penetrates the sample 2 after the cutting insert 11.

Once the cutting groove 21 has reached the same depth ad the radius of the sample 2, the part 22 of the sample 2 that is located behind the cutting groove 21 is detached from the sample 2, as a result of the cutting action of the parting off blade 1.

The cutting insert 11 may be fixed to the parting off blade 1 in any manner known in the art.

Particularly referring to Figure 1, the cutting insert 11 is fixed to the cutting blade by being fitted into a specially designed receptacle 13 and locked therein by elastic deformation of an element 14 that is formed of one piece with the blade 1.

Furthermore, the cutting section 12 generally has a smaller thickness than the cutting insert 11.

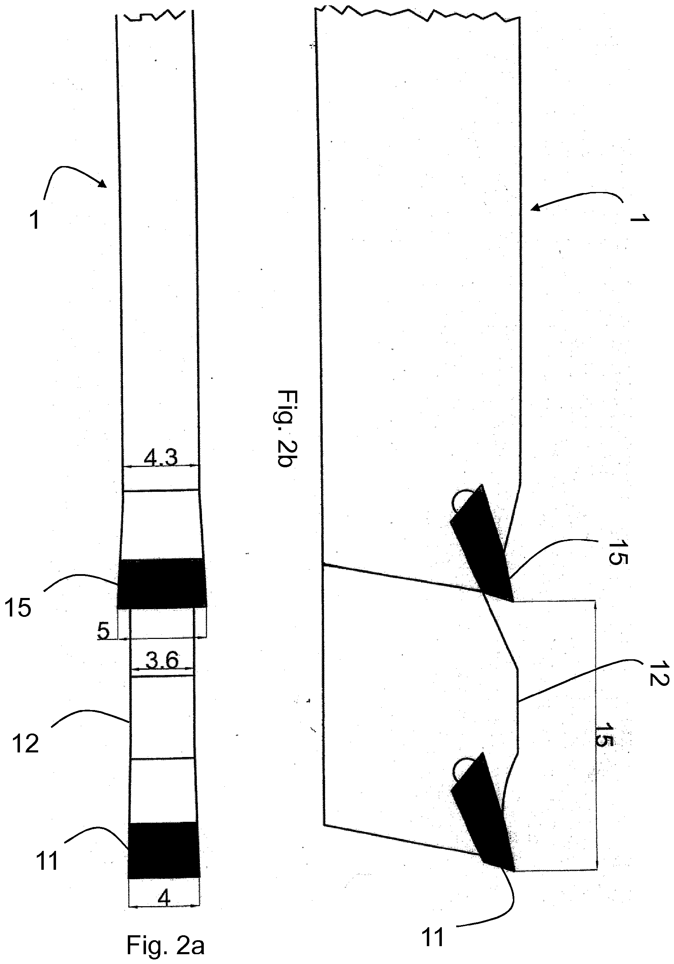

Figures 2a and 2b show two views of a possible embodiment of the parting off blade of the present invention.

This parting off blade is formed in much the same manner as the parting off blade of Figure 1, and has a first cutting insert 11 and a cutting section 12.

In addition, the parting off blade 1 of the present invention has a second parting off insert 15 located behind said cutting section 12

The second cutting insert 15 has a greater thickness than the first cutting insert 11.

The term "behind" will obviously have the meaning as described above with reference to Figure 1.

As shown in the figures, the two cutting inserts 11 and 15 are coaxially arranged along a longitudinal axis, to provide a symmetric thickness increase in the cutoff blade, from the first cutting insert to the second.

Referring to Figure 2a, assuming a vertical axis from the first insert 11 to the second insert 15, it will be appreciated that the thickness increase is symmetric with respect to such vertical axis, i.e. thickness increases to the right to the same extent as it increases to the left, as viewed in Figure 2a.

Both first 11 and second 15 cutting inserts may be fixed to the parting off blade 1 as described with reference to Figure 1.

Alternatively the second cutting insert 15 may be mounted in such a manner as to be able to move along the blade 1, to adjust the length of the cutting section 12.

A variety of arrangements may be envisaged for the second cutting section 15 to be able to slide along the cutting section 12.

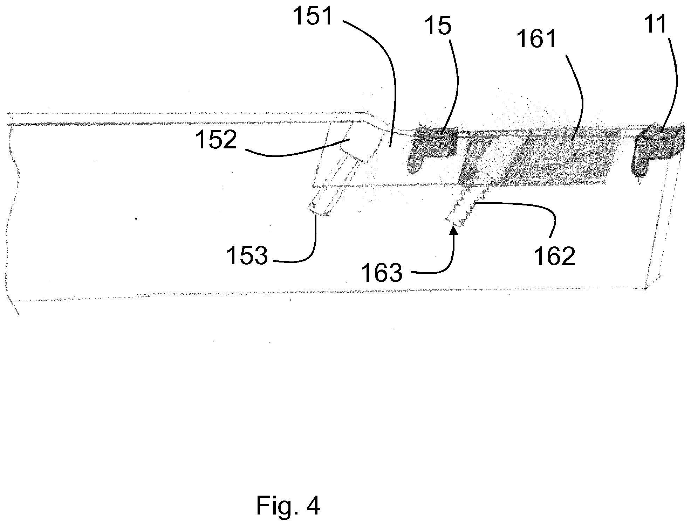

For example, as shown in Figure 4, several fastening receptacles may be provided along the parting off blade for fixation of the second cutting insert 15.

Thus, Figure 4 shows the parting off blade of the present invention with the second parting off insert 15 fixed to a plug 151 which is engaged in position by the action of a screw 152 engaged in a corresponding seat 153.

The translational movement of the second cutting insert 15 is ensured by the presence of a second plug 161, which is also locked in position by the action of a screw 16 and a seat 162; the two plugs may exchange their positions to change the position of the second cutting insert 15.

Alternatively, special slide guides may be provided, which cooperate with corresponding elements on the second cutting insert 15, such that the latter may slide and be fixed to adjust the length of the cutting section 12.

In the embodiment as shown in Figures 2a and 2b, the cutting section 12 has a length of 10 to 20 millimeters, preferably of 12 to 18 millimeters, particularly of 15 millimeters.

Furthermore, still according to the variant of the figures, the thickness difference between the first 11 and second 15 cutting inserts advantageously ranges from 0.5 to 1.5 millimeters.

Finally, particularly referring to Figure 2a, it shall be noted that the cutting section 12 has a smaller thickness not only as compared with the first cutting insert 11, but also as compared with the rest of the parting off blade 1 behind the second cutting insert 15.

Also, as shown in Figure 2b, the cutting section 12 is laterally composed of three sections, i.e., from the first cutting insert 11, a first ascending section, a second constant section and a third descending section.

This particular shape facilitates clean cutting, chip removal, and penetration of the cutting groove 21 by the cutting section 12.

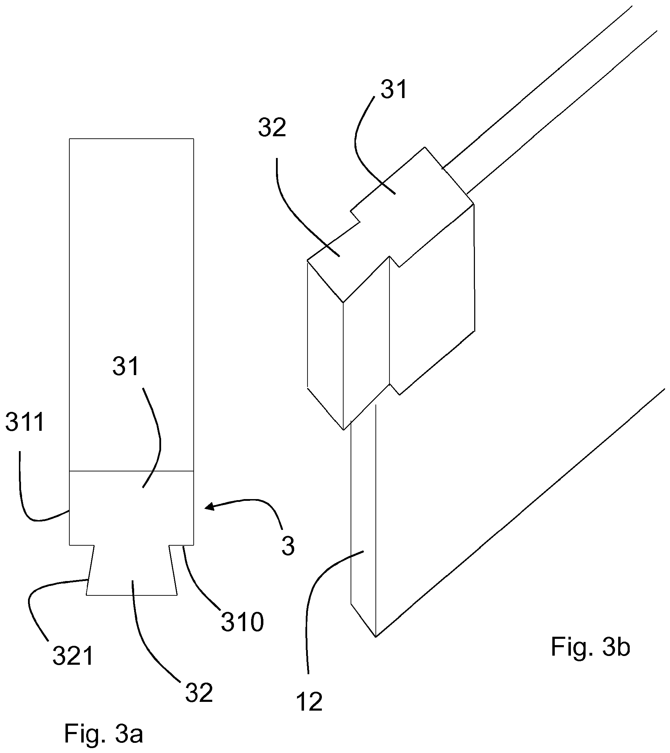

Figures 3a and 3b show a further embodiment the parting off blade 1, and particularly show a top view of the parting off blade 1 and a perspective view of the cutoff blade 1.

Here, the cutting insert 3 has been modified in view of increasing the width of the cutting groove 21.

The cutting insert 3 is mounted in much the same manner as the cutting insert 1 of Figure 1, i.e. at the free front end of the blade 1, a cutting section 12 being provided behind the cutting insert 3.

Furthermore, the cutting insert 3 has a front part 32 and a rear part 31, with the front part 32 having a smaller thickness as compared with the rear part 31.

Like the cutting insert of Figures 1 and 2, the cutting insert 3 may be also mounted in projecting relationship to the cutting section 12, to an extent that may vary according to construction requirements and to the nature of the material of the sample to be cut or the cutting insert 3.

Furthermore, the foremost part of the cutting insert 3 may be flat or inclined, once again according to construction requirements.

Particularly referring to Figures 3a and 3b, the cutting insert 3 has at least two side walls, a top wall and a bottom wall.

The side walls 321 of the front part 32 are connected to the side walls 311 the rear part 311 through a head wall 310.

In addition, according to the embodiment as shown in Figures 3a and 3b, the side walls 321 of the front part 32 are inclined to the head wall 310, to converge toward the head wall 310.

Finally,it shall be noted that the head wall 310 preferably has a width ranging from 0.2 millimeters to 1 millimeter.

## Claims

1. A parting off blade (1) for use in combination with a parting off machine, a lathe or the like, the parting off blade comprising a free front end for cutting a sample (2),
a first cutting insert (11) being mounted at said free front end of said blade (1) and a cutting section (12) being provided behind said first cutting insert (11),
at least one second cutting insert (15) being provided behind said cutting section (12), said second cutting insert (15) having a greater thickness than said first cutting insert (11),
**characterized in that**
said two cutting inserts (11, 15) are coaxially arranged along a longitudinal axis, to provide a symmetric thickness increase in said parting off blade, from said first cutting insert (11) to said second cutting insert (15).

2. A blade (1) as claimed in claim 1, wherein said second cutting insert (15) is mounted in such a manner as to be able to move along said blade (2).

3. A blade (1) as claimed in claim 1, wherein said cutting section (12) has a length of 10 to 20 millimeters, preferably of 12 to 18 millimeters, particularly of 15 millimeters.

4. A blade (1) as claimed in claim 1, wherein the thickness difference between the first (11) and second (12) cutting inserts ranges from 0.5 to 1.5 millimeters.

5. A parting off machine, a lathe or the like, comprising at least one parting off blade and a rotatably mounted support for a sample to be processed,
**characterized in that**
said parting off blade is according to any of claims 1 to 4.

## Patentansprüche

1. Abstechklinge (1) zur Verwendung in Kombination mit einer Abstechmaschine, einer Drehmaschine oder dergleichen, wobei die Abstechklinge ein freies Vorderende zum Schneiden einer Probe (2) umfasst,
einen ersten Schneideinsatz (11), der an dem freien Vorderende der Klinge (1) montiert ist, und einen Schneidabschnitt (12), der hinter dem ersten Schneideinsatz (11) bereitgestellt ist,
mindestens einen zweiten Schneideinsatz (15), der hinter dem Schneidabschnitt (12) bereitgestellt ist, wobei der zweite Schneideinsatz (15) eine größere Dicke als der erste Schneideinsatz (11) aufweist,
**dadurch gekennzeichnet, dass** die zwei Schneideinsätze (11, 15) koaxial entlang einer Längsachse eingerichtet sind, um eine symmetrische Dickensteigerung in der Abstechklinge von dem ersten Schneideinsatz (11) zu dem zweiten Schneideinsatz (15) bereitzustellen.

2. Klinge (1) nach Anspruch 1, wobei der zweite Schneideinsatz (15) derart montiert ist, dass er sich entlang der Klinge (2) bewegen kann.

3. Klinge (1) nach Anspruch 1, wobei der Schneidabschnitt (12) eine Länge von 10 bis 20 mm, bevorzugt von 12 bis 18 mm, insbesondere von 15 mm, aufweist.

4. Klinge (1) nach Anspruch 1, wobei der Dickenunterschied zwischen dem ersten (11) und dem zweiten (12) Schneideinsatz im Bereich von 0,5 bis 1,5 mm liegt.

5. Abstechmaschine, Drehmaschine oder dergleichen, die mindestens eine Abstechklinge und eine drehbar montierte Halterung für eine zu bearbeitende Probe umfasst, **dadurch gekennzeichnet, dass** die Abstechklinge nach einem der Ansprüche 1 bis 4 gebildet ist.

## Revendications

1. Lame de séparation (1) destinée à être utilisée en combinaison avec une machine de séparation, un tour ou similaire, la lame de séparation comprenant une extrémité avant libre pour couper un échantillon (2),
un premier insert de coupe (11) étant monté au niveau de ladite extrémité avant libre de ladite lame (1) et une section de coupe (12) étant fournie derrière ledit premier insert de coupe (11) ,
au moins un second insert de coupe (15) étant fourni derrière ladite section de coupe (12), ledit second insert de coupe (15) ayant une épaisseur supérieure audit premier insert de coupe (11),
**caractérisée en ce que** lesdits deux inserts de coupe (11, 15) sont disposés coaxialement le long d'un axe longitudinal, pour fournir une augmentation d'épaisseur symétrique dans ladite lame de séparation, dudit premier insert de coupe (11) audit second insert de coupe (15).

2. Lame (1) selon la revendication 1, dans laquelle ledit second insert de coupe (15) est monté de manière à pouvoir se déplacer le long de ladite lame (2).

3. Lame (1) selon la revendication 1, dans laquelle ladite section de coupe (12) a une longueur de 10 à 20 mm, de préférence de 12 à 18 mm, en particulier de 15 mm.

4. Lame (1) selon la revendication 1, dans laquelle la différence d'épaisseur entre les premier (11) et second (12) inserts de coupe est comprise entre 0,5 et 1,5 mm.

5. Machine de séparation, tour ou similaire, comprenant au moins une lame de séparation et un support monté de manière rotative pour qu'un échantillon soit traité, **caractérisée en ce que** ladite séparation est selon l'une quelconque des revendications 1 à 4.
